# EUROPEAN PATENT APPLICATION

(11) **EP 1 538 803 A1**
(43) Date of publication of application: **08.06.2005**
(21) Application number: 03293040.6
(22) Date of filing: 04.12.2003
(51) Int. Cl.: H04L 29/06, H04L 29/08

(54) **Host for coupling to an IP Network**

(71) Applicant: ALCATEL, 75008 Paris (FR)
(72) Inventor: Taeymans, Jean Renier, 2530 Boechout (BE); Gys, Ludo, 2200 Herentals (BE)
(74) Representative: Narmon, Gisèle

(57) **Abstract**

Host for coupling to an IP network, said host comprising at least two IP-stacks for coupling to IP-networks assigned to each IP-stack, further comprising at least one application, characterized in that a stack selection module is arranged between said IP-stacks and said application where said stack selection module is able to couple each IP-stack to said application.

## Description

### Field of the invention

The present invention relates to a host for connecting with an IP network, said host comprising at least two IP-stacks for connecting with IP-networks assigned to each IP-stack, further comprising at least one application. The present invention further relates to a communication system and a method for connecting an application with different IP networks.

### Background of the invention

The connection of terminal or server, which both are considered as hosts, to an IP network requires a network interconnection device, an IP-stack and an IP-address unique within the network. Each application being linked to the referred IP-stack uses the appropriate software mechanism. The IP-stack comprises several layers with different functionality, usually referred as application layer, presentation layer, session layer, transport layer, network layer, data link layer und physical layer. A complete implementation of these layers is usually referred to as so called TCP/IP-stack or shortened IP-stack. An IP-stack offers the whole functionality of a network to an application. The connection of a host e. g. a switch or a router, to multiple networks may be done using a multitude of network interconnection devices, IP-stacks and IP-addresses. For each IP network a single network interconnection device, IP-stack and IP-address is required. However, an application, either client or server application, can typically only be connected to one IP-stack.

Because an application can usually be connected only to one IP-stack coupling it to one IP network it is not possible for an application to switch between two or more IP networks.

### Objects of the invention

In general, the object of the invention is to overcome the before mentioned drawback. In particular, the object is to provide an improved means for coupling an application or a host to multiple networks.

### Summary of the invention

According to the invention, the above mentioned object is achieved by a host for connecting with an IP network, said host comprising at least two IP-stacks for connecting with IP-networks assigned to each IP-stack, further comprising at least one application, characterized in that a stack selection module is arranged between said IP-stacks and said application where said stack selection module is able to connecting each IP-stack with said application. The stack selection module is implemented as a software module and therefore performs its tasks as an independent software application. The stack selection module is placed between the application layer and underlying layers, for example presentation layer.

The host for connecting with an IP network according to the present invention can be used both as a client and as a server host. A host according to the present invention is able to be connected to different physical TCP/IP networks at one time. The host can switch between these TCP/IP networks at any time.

Preferably only one IP-stack is connecting with the application at a certain time. This means, that the application is granted access only to one IP-stack and never to two IP-stacks at once. So the application doesn't have to decide which IP-stack to use.

Preferably the stack selection module comprises a means for selection of said IP-stacks that is able to select one of the IP-stacks based on at least one selection criterion. The selection criteria comprise the availability of said IP networks, a quality of service of said IP networks or the costs of the connection to said IP networks. Availability means whatever network is reachable a certain time, for example a wireless communication device might be out of range. Quality of service is usually measured in terms of bandwidth to a destination, the time to replay for a certain host, the number of hops to a certain host and so on. The costs of the connection to one of the IP networks can be taken into account in different ways, depending on the cost model for each IP network. Especially in quality of service guaranteed networks the costs for a connection might differ depending on the qualtiy of service that is guaranteed for each connection to another host.

The above mentioned object of the invention is also achieved by a communication system comprising at least two hosts according to the present invention.

Further more, the above mentioned object is achieved by a method for coupling an application to different IP networks, said application running on a host comprising at least two IP-stacks for coupling to IP-networks assigned to each IP-stacks, characterized in that a stack selection module arranged between said IP-stacks and said application couples one of said IP-stacks to said application according to at least one selection criterion. Preferably, said method's selection criterion comprises at least the availability of said IP-Networks and/or quality of service of said IP-Networks and/or costs of the connection to said IP-networks.

Further more, the above mentioned object is achieved by a software program for use in a computer comprising a stack selection module according to one of the preceding claims. The stack selection module preferably uses a method according to claims 8 or 9. Preferably, the stack selection module comprises a means for selection of said IP-stacks that is able to select the IP-stack based on a at least one selection criterion. The selection criteria are preferably the availability of said IP networks, the quality of service or the costs of said IP networks.

### Brief description of the drawings

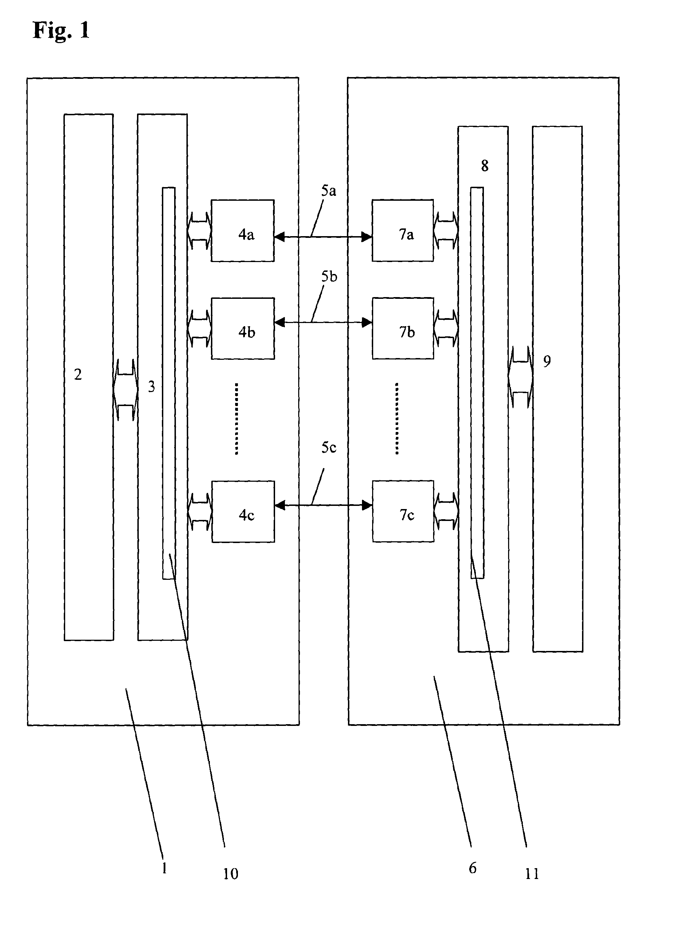

In the following description of preferred embodiments of the present invention, it is referred to the accompanying drawings wherein
Fig. 1 is a sketch showing the principle of an embodiment of the invention.

### Detailed description of the invention

According to Fig. 1, a client host 1 comprises at least one client application 2. However, the client host 1 will comprise a multitude of applications. Client application 2 communicates via a stack selection module 3 with a number of IP-stacks 4. References 4a, 4b, 4c in Fig. 1 indicate that all IP-stacks 4 are implemented running independently from each other as "stand alone" applications or stacks. In terms of the International Standardisation Organisation/Open Systems Interconnection reference model stack selection module 3 and IP-stacks 4a, 4b, 4c are part of presentation layer and lower layers. Each IP-stack 4a, 4b, 4c is connected to an IP-based network 5a, 5b, 5c. The different networks 5a, 5b, 5c are connected to a server host 6. The server host 6 comprises a plurality of IP-stacks 7a, 7b, 7c which are connected to a stack selection module 8 that is connected to an application 9. Dashed lines between IP-stacks 4b and 4c as well as 7b and 7c indicate that the amount of IP-stacks used can be any number at all.

When the connection between the client side application 2 to a server side application 9 has to be established, stack selection module 3 uses a means for selection 11 of suitable IP-stacks 4a, 4b, 4c. The means for selection 11 is usually implemented as a software module and uses the availability, quality of service and costs of connection of each IP network 5a, 5b, 5c to determine which of the connections to use. Stack selection module 8 uses a means for selection 12 of suitable IP-stacks 7a, 7b, 7c. The function of said modules described with reference to the client application work in the same way with respect to the server side application.

The stack selection module 3 is implemented as a software module and placed between the application layer and the IP protocol stacks, both at the client and at the server hosts. The module decides which appropriate IP network to use from a plurality of available IP networks. The stack selection module 3 does this within a set of rules based on the availability of the network, that means out of range for wireless connection for example, based on the required quality of service and based on a set of accounting rules, for example, least cost routing, based on the time of the day, day of the week or based on the profane of the user and so on. The stack selection module hereto negotiates with each of the networks for the appropriate sources, e.g. the IP-addresses. The stack selection module 3 sends particular packets on regular intervals using each of the networks in order to access the availability and the quality of service of each of the networks. The stack selection module 3 hence continuously monitors the availability and quality of service in terms of bandwidth, packet loss and so on of each of the networks and tends to disconnect and reconnect if needed. In case of packet loss the stack selection module 3 attempts to transmit the packets through alternative networks 5a, 5b, 5c etc. Client stack selection module 3 and server stack selection module 8 may use different networks for sending packets, both stack selection modules 3, 8 use the most appropriate IP-stack and hence IP network.

All of the steps described before are masceraded, including the use of the several IP-addresses towards the client and server applications. The client and server application are aware of only one virtual network.

The present invention is able to offer the possibility of seamless roaming between the several IP networks to the enduser, where roaming criterion is based on the required quality of service, costs, location etc. For example, user will stay continuously connected with for example his e-mail server disregarding which network is used in any given moment.

## Claims

1. Host (1) for connecting with an IP network (5a, 5b, 5c, ...), said host (1) comprising at least two IP-stacks (4a, 4b, 4c, ...) for connecting with IP-networks assigned (5a, 5b, 5c, ...) to each IP-stack (4a, 4b, 4c, ...), further comprising at least one application (2), **characterized in that** a stack selection module (3) is arranged between said IP-stacks (4a, 4b, 4c, ...) and said application (2) where said stack selection module (3) is able to connect each IP-stack (4a, 4b, 4c, ...) with said application (2).

2. Host according to claim 1, **characterized in that** only one IP-stack (4a, 4b, 4c, ...) is connected with said application (2) at a certain time.

3. Host according to one of the preceding claims, **characterized in that** said stack selection module (3) comprises a means for selection (11) of said IP-stacks (4a, 4b, 4c, ...) that is able to select one of the IP-stacks (4a, 4b, 4c, ...) based on at least one selection criterion.

4. Host according to one of the preceding claims, **characterized in that** said selection criterion comprises at least the availability of said IP-Networks (5a, 5b, 5c, ...).

5. Host according to one of the preceding claims, **characterized in that** said selection criterion comprises at least a quality of service of said IP-Networks (5a, 5b, 5c, ...).

6. Host according to one of the preceding claims, **characterized in that** said selection criterion comprises at least the costs of the connection to said IP-networks (5a, 5b, 5c, ...).

7. Communication System comprising at least two hosts (1, 6) according to one of the preceding claims.

8. Method for coupling an application (2, 9) to different IP networks (5a, 5b, 5c, ...), said application (2, 9) running on a host (1, 6) comprising at least two IP-stacks for coupling to IP-networks (5a, 5b, 5c, ...) assigned to each IP-stacks, **characterized in that** a stack selection module (3, 8) arranged between said IP-stacks and said application (2, 9) connects one of said IP-stacks with said application (2,9) according to at least one selection criterion.

9. Method according to the preceding claim, **characterized in that** that said selection criterion comprises at least the availability of said IP-Networks and7or quality of service of said IP-Networks and/or costs of the connection to said IP-networks (5a, 5b, 5c, ...).

10. Software program for use in a computer comprising a stack selection module (3, 8) according to one of the preceding claims.
